(19) Europäisches Patentamt
European Patent Office
Office européen des brevets

(11) Publication number: **0 649 887 A2**

# (12) EUROPEAN PATENT APPLICATION

(21) Application number: **94116664.7**

(51) Int. Cl.$^6$: **C09D 5/00**

(22) Date of filing: **21.10.94**

(30) Priority: **22.10.93 JP 287487/93**

(43) Date of publication of application:
**26.04.95 Bulletin 95/17**

(84) Designated Contracting States:
**DE FR GB**

(71) Applicant: **DOW CORNING ASIA, Ltd.**
**Sumitomo Tamuracho Building,**
**1-15-1 Nishishimbashi,**
**Minato-ku**
**Tokyo 105 (JP)**

(72) Inventor: **Maruyama, Teruhito, Dow Corning Asia, Ltd.**
**1-15-1 Nishishimbashi**
**Minato-ku,**
**Tokyo 105 (JP)**

(74) Representative: **Spott, Gottfried, Dr. et al**
**Sendlinger-Tor-Platz 11**
**D-80336 München (DE)**

## (54) Water-repellant and antiseptic coating composition.

(57) A water-repellent and antiseptic coating composition comprising: (a) 15-75 weight % of hydrophobicizing filler, which has been subjected to the hydrophobicizing treatment with organic group-containing hydrophobicizing agent, and of which the hydrophobicized ratio, S, is higher than 2.7 weight %; and (b) 25-85 weight % of binder.

EP 0 649 887 A2

## BACKGROUND OF THE INVENTION

### 1. Field of the Invention.

The present invention relates generally to compositions that are useful for forming a water-repellent coating on a substrate and more particularly to such compositions wherein the coatings formed therefrom also exhibit antiseptic properties.

### 2. Description of the Prior Art.

Various compositions adapted for forming water-repellent coatings on various substrates are disclosed in JP (Kokai) 48-39382, JP (Kokai) 3-215570, and JP (Kokai) 3-244996.

JP (Kokai) 48-39382 teaches the formation of a hydrophobic fine powder layer (having an average particle size 5-10 $\mu$m) on the substrate surface which utilizes (a) fine water droplets (having an average size below 2 $\mu$m) and (b) hydrophobic material of contact angle greater than 90°.

JP (Kokai) 3-215570 discloses a water-repellent paint that includes (a) hydrophobic fine powder having a surface tension less than 32 dyne/cm and (b) a resin having a water absorbing capacity less than 0.5 % selected from the group consisting of silicone resin, fluororesin, polyethersulfone resin, polyphenylenesulfide resin, acrylic resin, epoxy resin, polyimide resin and admixtures thereof.

JP (Kokai) 3-244996 discloses a water-repellent coating composition including (a) inorganic or organic powder having a porous structure and a particle size less than 4 $\mu$m, and (b) a silicone or fluorine containing resin compound.

Each of the prior art references teaches the use of compositions including (a) particulate filler material and (b) a hydrophobic binder.

## BRIEF DESCRIPTION OF THE INVENTION

It is therefore an object of the present invention to provide a composition for forming a water-repellant coating on a substrate, which composition does not require the use of a water-repellant binder.

It is another object of the present invention to provide a composition for forming a water-repellant coating which also exhibits antiseptic characteristics.

The present invention is set forth in its entirety in Japanese Patent Application No. 05-287487(93), filed on October 22, 1993 and incorporated in its entirety herein by reference.

In accordance with the present invention there is provided a composition for forming a water-repellent and antiseptic coating on a substrate, the composition comprising:

(a) 15-75 weight % of hydrophobicizing filler;

said hydrophobicizing filler being a filler material reacted with an organic group-containing hydrophobicizing agent;

said hydrophobicizing filler having a hydrophobicized ratio, S, associated therewith;

said hydrophobicized ratio, S, being greater than about 2.7 weight %; and

(b) 25-85 weight % binder.

## DETAILED DESCRIPTION OF THE INVENTION

In accordance with the present invention there is provided a composition for forming a water-repellent and antiseptic coating on a substrate, the composition comprising:

(a) 15-75 weight % of hydrophobicizing filler;

said hydrophobicizing filler being a filler material reacted with an organic group-containing hydrophobicizing agent;

said hydrophobicizing filler having a hydrophobicized ratio, S, associated therewith;

said hydrophobicized ratio, S, being greater than about 2.7 weight %; and

(b) 25-85 weight % binder.

As used herein, the term "water-repellent" as applied to cured coating composition means that the coating exhibits a falling angle of less than 20°, both at an initial stage and after a water resistance test, as described in detail, below.

The composition of the organic group-containing hydrophobicizing agent is limited to compounds having organic groups that are reactive with the filler material, so as to have the ability to be chemically bonded thereto.

For example, the organic group-containing hydrophobicizing agent can be silane compounds such as trimethylchlorosilane, triethylchlorosilane, tri-n-propylchlorosilane, tri-n-butylchlorosilane, tert-butyldimethylchlorosilane, n-butyldimethylchlorosilane, octadecyldimethylchlorosilane, trimethylmethoxysilane, trimethylethoxysilane, chloromethyltrimethylsilane, hexamethyldisilazane, 1-(3-chloropropyl)-1,1,3,3,3-pentamethyldisiloxane, 1-chloromethyl-1,1,3,3,3-pentamethyldisiloxane, trifluoropropyldimethylchlorosilane, tridecafluorooctyldimethylchlorosilane, trifluoropropyldimethylmethoxysilane, tridecafluorooctyldimethylmethoxysilane, etc., polydimethylsiloxane of silicone compounds which have a reactive functional group at a terminal such as -H group, -Cl group, -OR group wherein R is H or an alkyl group having 1-4 carbon atoms, $-CH=CH_2$, etc., fluorine-containing compounds such as trifluoroethyl iodide, hexafluoropropylene oxide, etc., and aliphatic hydrocarbon compounds such as alkyl chloride, etc., and, in particular, such as trimethylchlorosilane, octadecyldimethylchlorosilane, hexamethyldisilazane. Polydimethylsiloxanes having a terminal -H or -Cl are preferred.

The most preferred hydrophobicizing agents include an organic group in accordance with the following general formula:

$-X(CR_3)_3$

wherein X is Si or C, and R is H or F.

In accordance with the invention, the hydrophobicized ratio, S, of the hydrophobicized filler is defined as the ratio of the weight of the carbon atom contained in the organic groups bonded to the filler material by reaction with the hydrophobicizing agent divided by the weight of the filler material subjected to the hydrophobicizing agent, expressed as a weight percent.

The following expression can be used to calculate S, the hydrophobicized ratio associated with any hydrophobicizing filler:

$$S = \frac{LxC/100}{P} \times 100$$

wherein

P = the weight of filler material subjected to reaction with an organic group-containing hydrophobicizing agent;

L = the weight of the organic groups bonded to the filler material by reaction with the hydrophobicizing agent; and

C = the fraction of the carbon atoms in the weight of the organic groups bonded to the filler by the hydrophobicizing treatment.

In accordance with the above equation, the organic groups bonded to the filler material are, for example, when the hydrophobicizing agent is $Me_3SiNHSiMe_3$ and the filler is silica, $-SiMe_3$ of $Si-O-SiMe_3$ formed as a result of hydrolysis of $Me_3SiNHSiMe_3$ and its bonding to Si-OH on the silica surface.

As a further example, if the hydrophobicizing agent is:

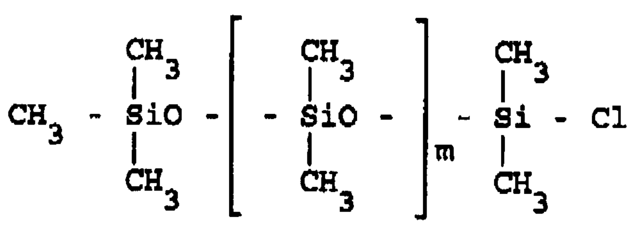

and the filler is silica,

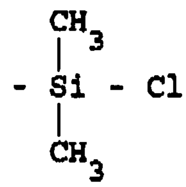

is hydrolyzed and bonded to Si-OH on the silica surface, and

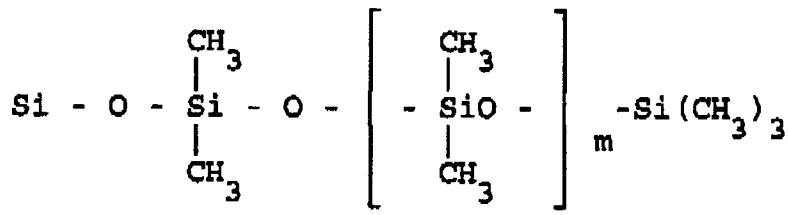

is formed. Then

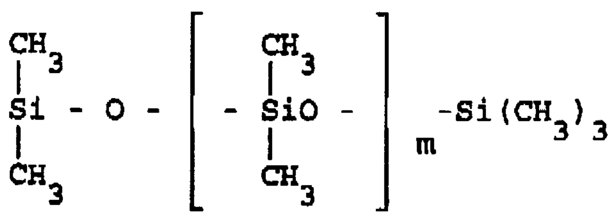

is the organic group bonded to the filler particle.

In accordance with the present invention, the hydrophobicizing filler should have the hydrophobicized ratio, S, greater than 2.7 %, and the weight ratio of the filler material to the hydrophobicizing agent should be greater than about 15 wt % and lower than about 75 wt %. It is preferable that the hydrophobicized ratio, S, be greater than about 3 %, and more preferably greater than about 5 %. It is also preferable that the portion of the filler material that actually reacts with the hydrophobicizing agent to produce the hydrophobicizing filler, referred to herein as the compounding amount or compounding ratio, be greater than about 20 wt %, and even more preferably greater than about 25 wt %.

If the foregoing conditions are not met, the coating produced from the composition of the invention lacks sufficient water-repellency (i.e. the falling angle is less than 20° both at the initial stage and after the water resistance test) and antiseptic properties. Furthermore, even if the hydrophobicized ratio, S, is greater than 2.7 %, the coating characteristics are compromised when the compounding ratio in the composition is higher than 75 wt %, and thus the applicability of the composition is greatly reduced.

In accordance with the present invention, the filler material is in particulate form and of the type commonly added to resins and elastomers. Specific examples include silica, alumina, ferric oxide, titanium dioxide, zinc oxide, calcium carbonate, barium carbonate, cobalt carbonate, calcium silicate, magnesium silicate, copper oxide, cobalt oxide, carbon black, silicone resin, acrylate copolymer and styrene polymers. Filler material having -OH groups on the surface are especially preferred, and silica and alumina, which include Si-OH or Al-OH surface chemistries are the most preferred.

Although the particle size of the filler material is not particularly limited, it should preferably be less than 10 μm, and more preferably less than 1 μm.

Binders used in the composition of the invention can be any organic material, as long as it is non-water-absorbing and can be used to coat a substrate at room temperature or by simple heating. Suitable binders include water-repellent resins as silicone resins or fluororesins and a wide range of thermoplastic or thermosetting resins and elastomers, either individually or as admixtures.

Excepting water-absorbing resins such as cellulose and methacrylic systems, the so-called common resins and elastomers can be used to formulate the coating composition of the invention. Curing catalysts or vulcanizing agents may be used as needed.

Examples of specific resin or rubber that have utility as the binder component in the composition of the invention include but are not limited to polyethylene, polypropylene, polystyrene, ABS, AS, EVA, ionomer, polymethylpentene, poly(vinyl chloride), poly(methyl acrylate), poly(vinyl acetate), polyacrylonitrile, poly-(vinyl alcohol), polycarbonate, polyester, nylon, polyallylate, polysulfone, polyethersulfone, polyetherketone, fluorine plastic, melamine, phenol, urethane, epoxy, unsaturated polyester, diacrylphthalate, mixture resin of epoxy and phenol, mixture resin of polyacrylonitrile and epoxy, urethane rubber, fluorine-contained rubber, butyl rubber, polysulfide rubber, olefin rubber, nitrile rubber, silicone rubber, silicone resin, fluororesin and butadiene rubber.

The composition of the present invention is formulated by mixing the organic binder and the hydrophobicized filler. Mixing can be carried out in a sand mill, ball mill, tumbler or simply by stirring.

The composition of the present invention can be diluted, as needed, by adding an appropriate solvent. In order to improve the workability of coating or to adjust coating thickness as the composition is applied to a substrate, the concentration of the effective constituents of the composition can be controlled by the addition of appropriate solvent. Usable solvents include alcohols, ketones, aromatic compounds, ethers and other hydrocarbons. The solvent must, however, be compatible with binder used in the composition of the invention.

Known additives may be used in the composition of the present invention to improve select properties. For instance, it may be desirable to add a curing promoter to shorten the time required to cure the binder in composition. Known curing promoters include dibutyl-tin-diacetate, platinum complexes and amine catalysts, which generally constitute less than 2 wt % of the composition.

The composition of the present invention is used to form a coating on a substrate material, thereby imparting the substrate with water-repellency. As used herein, the term "coating" as applied to a substrate, includes surface impregnation of the substrate with the composition of the invention. Conventional coating techniques including dip coating, roll coating, brush coating method and spraying are all effectively used to apply the composition of the invention to a substrate.

The coating composition of the invention can be used with a wide range of substrate materials including metals, plastics, inorganic materials, rubbers, glasses and fibers. The composition of the invention has utility for application to any substrate where water-repellency and/or antiseptic properties are considered desirable, including air conditioning components, and kitchen, toilet and bathroom surfaces.

Referring now to Table 2, there is disclosed six Examples of the present invention and two Comparison examples. Filler materials, in the form of various silica particles, a, b, c, d, e, f, and g, obtained by dry process or wet process, were hydrophobicized by various hydrophobicizing agents. The hydrophobicized ratio, S, as well as the specific surface area and the particle size of the filler material particles for each of the examples, is also shown in Table 2.

The hydrophobicized ratio, S, of the Examples and Comparison Examples was carried out using a high-frequency, infrared heating absorption method. (LECO Corp., CS-344 was used.)

In each instance, a 0.5 g sample of hydrophobicized silica was set in the test equipment and heated to about 2000 °C by high-frequency heating. This converted all carbon in the sample into $CO_2$ gas. The amount of $CO_2$ gas that was generated was measured by infrared absorption spectrum and the carbon content was calculated. The measurement was repeated 3 times and the average was calculated. The hydrophobicized ratio, S, after subjecting the filler material to reaction with the hydrophobicizing agent, was calculated from the weight and carbon content of the sample.

Table 1 discloses that the carbon content of silica filler material before reaction with the hydrophobicizing agent is extremely small.

Table 1

| | Method of silica Manufacturing | hydrophobicizing agent | Carbon content (wt %) | Category | Particles | |
|---|---|---|---|---|---|---|
| | | | | | Specific surface area ($m^2/g$) | Particle size (nm) |
| Reference example | Dry | None | 0.18 | X | 300±15 | 8±2 |
| Reference example | Dry | None | 0.021 | Y | 200±15 | 10±2 |

The treated filler material particles of category a and category c disclosed in Table 2, are were selected from category X, above, and subjected to reaction with a hydrophobicizing agent.

Also, the treated filler material particles of category g in Table 2, below, were selected from category Y, above, subjected to reaction with a hydrophobicizing agent.

## Table 2

| | Manufacturing Method of silica | hydrophobicizing agent | Hydrophobicized ratio, S | Treated particles: Category | Treated particles: Specific surface area ($m^2/g$) | Treated particles: Particle size (nm) |
|---|---|---|---|---|---|---|
| Comparison example | Dry | (i) | 2.26 | a | 260±40 | 7±2 |
| Example | Dry | (i) | 4.08 | b | 200±40 | 8±2 |
| Example | Dry | (i) | 3.69 | c | 220±40 | 7±2 |
| Example | Wet | (i) | 3.31 | d | 90±30 | 18±2 |
| Comparison example | Dry | (ii) | 0.78 | e | 110±20 | 16±2 |
| Example | Dry | (iii) | 3.36 | f | 100±20 | 14±2 |
| Example | Dry | (iv) | 6.76 | g | 150±30 | 12±2 |

(ii) $Cl_2SiMe_2$
(iii) Polydimethylsiloxane (having $Cl(CH_3)_2Si$ - at a terminal)
(iv) $C_6H_{13}SiCl_3$

40 weight %, by solid content, of the hydrophobicized fillers a-g shown in Table 2 and 60 weight % of epoxy resin paint were mixed and stirred by a table-top sand mill. The resulting compositions were coated over aluminum plates by dip coating and subsequently cured at 200 °C for 30 minutes. The aluminum plates having the cured coating compositions formed thereon were then subjected to water resistance testing for 3 days in accordance with JIS K-5400. The falling angles of water drops, before and after the

water resistance test, were measured. The results of these experiments are disclosed in Table 3.

These experiments reveal the relationship between the hydrophobicized ratio, S, and the water-repellent characteristics of the coatings formulated therewith, at a fixed amount of the filler material particles at 40 weight %. In accordance with the use of the term "water-repellent" herein, only the Examples of the invention, where the hydrophobicized ratio was higher than about 3 wt %, were found to posses the requisite water repellency.

Table 3

| | Composition | Compounded filler | Falling angle Initial (°) | Falling angle After water resistance test (°) | Falling angle difference (°) | Hydrophobicized ratio (wt %) |
|---|---|---|---|---|---|---|
| Comparison example | A | a | 3 | 35 | 32 | 2.26 |
| Example | B | b | 3 | 15 | 12 | 4.08 |
| Example | C | c | 3 | 18 | 15 | 3.69 |
| Example | D | d | 2 | 2 | 0 | 3.31 |
| Comparison example | E | e | 27 | 45 | 18 | 0.78 |
| Example | F | f | 2 | 9 | 7 | 3.36 |
| Example | G | g | 3 | 13 | 10 | 6.76 |

(Note) (i) $Me_3SiNHSiMe_3$

Referring now to Table 4, Composition B from Table 3 was varied so that the compounding amount of the hydrophobicized filler b was varied at 10, 30, and 40 weight % and the falling angle data for each variation of the composition was measured. The relationship between the weight of the hydrophobicized filler used and the water-repellent effect is clear from this data.

Table 4

| | Compounding amount of filler (b) (wt %) | Falling angle | | Hydrophobicized ratio (wt %) |
|---|---|---|---|---|
| | | Initial (°) | After water resistance test (°) | |
| Comparison example | 10 | 45 | 45 | 4.08 |
| Example | 30 | 4 | 20 | 4.08 |
| Example | 40 | 4 | 17 | 4.08 |

In a similar manner, Composition D from Table 3 was varied so that the compounding amount of the hydrophobicized filler d was varied at 10, 30, and 40 weight % and the falling angle data for each variation of the composition was measured. The relationship between the weight of the hydrophobicized filler used and the water-repellent effect is clear from this data set forth in Table 5, below.

Table 5

| | Compounding amount of filler (d) (wt %) | Falling angle | | Hydrophobicized ratio (wt %) |
|---|---|---|---|---|
| | | Initial (°) | After water resistance test (°) | |
| Comparison example | 10 | 45 | 45 | 3.31 |
| Example | 25 | 3 | 6 | 3.31 |
| Example | 30 | 4 | 6 | 3.31 |
| Example | 40 | 4 | 5 | 3.31 |
| Comparison example | 0 | 45 | 45 | - |

In Composition D as set forth in Table 3, the epoxy resin paint was replaced by acrylic resin paint and the compounding amount of hydrophobicizing filler d was varied from 5 to 35 weight %. The falling angle data was measured and is set forth in Table 6.

Table 6

| | Compounding amount of filler (d) (wt %) | Falling angle | | Hydrophobicized ratio (wt %) |
|---|---|---|---|---|
| | | Initial (°) | After water resistance test (°) | |
| Comparison example | 5 | 45 | 45 | 3.31 |
| Example | 35 | 22 | 22 | 3.31 |
| Comparison example | 0 | 45 | 45 | - |

Next, Composition D, as set forth in Table 3, was prepared except that fluororesin was substituted for the epoxy resin, and the compounding amount of the hydrophobicizing filler d was varied from 10 to 35

weight %. The falling angle data was measured and is set forth in Table 7, below.

Table 7

| | Compounding amount of filler (d) (wt %) | Falling angle | | |
|---|---|---|---|---|
| | | Initial (°) | After water resistance test (°) | Hydrophobicized ratio (wt %) |
| Comparison example | 10 | 45 | 45 | 3.31 |
| Example | 35 | 25 | 25 | 3.31 |

Now, the method and results of the antiseptic test are explained.

Sample preparation method

Slide glass or aluminum plate of 80 × 25 × 1.4 mm size level were washed with alkali solution and organic solvent and dried to prepare a sample piece. On this sample piece, a coating material was coated uniformly to about 25 mm from the top of the sample piece by dipping, brushing or spraying method, and cured by heating to prepare a test sample.

Testing method

The test samples were wrapped in aluminum foil, carefully avoiding any scratch on the surface of the coating, and subjected to the dry heat sterilization in an oven (200°C, 20 minutes.) A potato dextrose-agar (PDA) culture medium was dissolved in distilled water and poured into sterilized 20 ml Petri dishes and sterilized in an autoclave (120°C, 20 minutes.) After sterilization, the filled Petri dishes were placed on a clean bench and the PDA culture permitted to hardened.

Next, 50 ml of distilled water was poured into a 100 ml Erlenmeyer flask, and Tween 80 (a surfactant) was added to prepare 0.05 % solution of Tween 80. Thereafter, about 10 pieces of glass beads were added to the flask which was then sterilized in the autoclave (120°C, 20 minutes) to prepare a test solution. Using a Pasteur pipet, 1 ml of the test solution was dripped into a culture in which a preserved fungus species was planted. This was then stirred using a vortex mixer, and after separating fungus spores, the spores were returned to the test solution and further stirred and mixed to prepare the spore suspension.

0.2 ml of the spore suspension was dropped on the PDA in the sterilized Petri dishes and spread uniformly with a glass rod. The test sample was taken out of the aluminum foil and placed at the center of this PDA. The Petri dishes were covered and the cover fixed with vinyl tape to prevent dissipation of spores to the outside. The covered Petri dishes were placed in the incubator (25°C) to incubate. The incubation period was one month, the growth of fungus being observed weekly. The antiseptic characteristics of the coatings were judged in accordance with the criteria set forth in Table 8, below.

Table 8

| Judgement method | |
|---|---|
| Growth of hyphae | Indication of antisepticity |
| No growth of hyphae recognized on the test sample | 3 |
| Growth of hyphae recognized on the test sample, but not exceeding 1/3 of the total area | 2 |
| Growth of hyphae recognized on the test sample, exceeding 1/3 of the total area | 1 |

Listed below are the tent fungi used to test the antiseptic characteristics of the coatings.
Aspergillus niger IFO 6341 (Black *koji* mold)
Penicillium citrinum IFO 6352 (Blue mold)

The water-repellent coating sample tested for its antiseptic characteristics was that designated as composition D, consisting of epoxy resin paint 60 wt % and filler (d) 40 wt %, and a Blank which received

no coating.
Blank (no treatment).

Table 9

| Results of Test for antiseptic characteristics | | | | | |
|---|---|---|---|---|---|
| No. | Sample name | A. niger IFO 6341 | | P. citrinum IFO 6352 | |
| 1 | Coating sample | 3 | 3 | 3 | 3 |
| 2 | Blank | 1 | 1 | 2 | 2 |

Preferable examples of the composition in the present invention are disclosed below in Table 10.

Table 10

| | Hydrophobicized filler | | | Binder | Hydrophobicizing agent |
|---|---|---|---|---|---|
| | Type | Hydrophobicized ratio wt % | Compounding amount wt % | | |
| 1 | Hydrophobicized silica or hydrophobicized alumina | higher than 3 | 25-70 | Epoxy resin paint | (i), (ii), (iii), or (iv) of Table 2 |
| 2 | Hydrophobicized silica or hydrophobicized alumina | higher than 3 | 30-70 | Acrylic resin paint | (i), (ii), (iii), or (iv) of Table 2 |
| 3 | Hydrophobicized silica or hydrophobicized alumina | higher than 3 | 30-70 | fluororesin paint | (i), (ii), (iii), or (iv) of Table 2 |
| 4 | Hydrophobicized silica or hydrophobicized alumina | higher than 3 | 15-70 | Mixture of epoxy resin paint and organopolysiloxane | (i), (ii), (iii), or (iv) of Table 2 |
| 5 | Hydrophobicized silica or hydrophobicized alumina | higher than 3 | 15-70 | Mixture of acrylic resin paint and organopolysiloxane | (i), (ii), (iii), or (iv) of Table 2 |

By replacing epoxy resin paint in composition D with a mixture of epoxy resin and silicone resin, the following data, set forth in Table 11, were obtained.

Table 11

| | Composition (wt %) | | | | Falling angle (°) | | Hydrophobicized |
|---|---|---|---|---|---|---|---|
| | Epoxy resin | Silicone resin (A) | Silicone resin (B) | Filler (d) | Initial | After water resistance test | ratio (wt %) |
| Example | 75 | 5 | - | 20 | 17 | 23 | 3.31 |
| Example | 70 | 10 | - | 20 | 16 | 25 | 3.31 |
| Example | 75 | - | 5 | 20 | 4 | 5 | 3.31 |
| Example | 70 | - | 10 | 20 | 4 | 4 | 3.31 |
| Silicone resin (A) : Vinyl group-containing silicone resin<br>Silicone resin (B) : Methyl silicone resin | | | | | | | |

Curing conditions for the compositions in Table 11 were as follows:

| | |
|---|---|
| Acrylic resin paint | 200°C/20 minutes |
| Epoxy resin paint | 200°C/20 minutes |
| Fluororesin paint | 120°C/20 minutes |
| Mixture of epoxy resin paint and silicone resin | 200°C/20 minutes |

Method of falling angle measurement

The composition of the present invention was coated on an aluminum plate (JIS-A1100) by dipping, and thereafter cured by heating. It was dried well to remove solvent. (Curing conditions are set forth above.)

At a fixed position on the coating (3-4 μm thick) formed on the aluminum plate, 10 μl of distilled water was dropped in such a way that the water drops stayed stationary.

Subsequently, keeping one end of the long edge of the plate contacting the desk, the other end was lifted at the rate of 8 mm/sec.

The angle at which the water drop started moving from the initial position was measured and was defined as the falling angle.

In the cage of the Examples of the invention, as soon as the water drop started moving, it fell off the plate. A falling angle larger than 45° was considered to be meaningless and was not measured. Therefore, 45° is the upper limit. Consequently, the falling angle 45° in the above data indicates larger than 45° in all cases.

Table 12

| | Composition | Compounded filler | Contact angle (°) Initial | Contact angle (°) After water resistance test | Contact angle difference (°) | Hydrophobicized ratio (wt %) |
|---|---|---|---|---|---|---|
| Example | B | b | 168 | 155 | 13 | 4.08 |
| Example | C | c | 162 | 148 | 14 | 3.69 |
| Example | D | d | 165 | 164 | 1 | 3.31 |
| Example | F | f | 167 | 158 | 9 | 3.36 |
| Example | G | g | 158 | 153 | 5 | 6.76 |

Measurement of contact angle

Measurement equipment: Contact angle meter CA-S
Manufactured by Kyowa Kaimen Kagaku Co.
Condition: A drop of distilled water 10 μl was dropped.

(1) By adopting the composition in the present invention, the binder selection is now extremely diverse, and therefore, it is possible to form a highly water-repellent and antiseptic coating which is the most suitable to the substrate and environment where the composition is applied.

(2) Since the composition in the present invention exhibits both highly water-repellent and antiseptic characteristics, a single treatment gives the both characteristics to the part or location applied.

(3) The composition of the present invention can be applied by any of coating, dipping, or spraying method.

(4) According to the water-repellent coating composition of the present invention, one can form a coat of less than 1 $\mu m$ which exhibits the falling angle of water drop of less than 20° after the water resistance test. Consequently, by treating the location which is always exposed to moisture by frosting or running water such as the aluminum fins used in the evaporator of an air conditioner or the inside of the polypropylene tub of a washing machine, one can prevent residual moisture for an extended period, since the effect of the coat is good even after the water resistance test, and thus improve the efficiency of the heat exchanger or prevent the degradation of substrate material by moisture.

## Claims

**1.** A water-repellent and antiseptic coating composition comprising:

(a) 15-75 weight % of hydrophobicizing filler;

said hydrophobicizing filler being a filler material reacted with an organic group-containing hydrophobicizing agent;

said hydrophobicizing filler having a hydrophobicized ratio, S, associated therewith;

said hydrophobicized ratio, S, being greater than about 2.7 weight %; and

(b) 25-85 weight % binder.

**2.** A water-repellent and antiseptic coating composition in accordance with Claim 1, wherein said hydrophobicizing agent includes an organic group of following general formula:

$$- X(CR_3)_3$$

wherein X is Si or C, and
R is H or F.

**3.** A water-repellant and antiseptic coating composition in accordance with Claim 1 wherein said hydrophobicizing agent is selected from the group consisting of trimethylchlorosilane, triethylchlorosilane, tri-n-propylchlorosilane, tri-n-butylchlorosilane, tert-butyldimethylchlorosilane, n-butyldimethylchlorosilane, octadecyldimethylchlorosilane, trimethylmethoxysilane, trimethylethoxysilane, chloromethyltrimethylsilane, hexamethyldisilazane, 1-(3-chloropropyl)-1,1,3,3,3-pentamethyldisiloxane, 1-chloromethyl-1,1,3,3,3-pentamethyldisiloxane, trifluoropropyldimethylchlorosilane, tridecafluorooctyldimethylchlorosilane, trifluoropropyldimethylmethoxysilane, tridecafluorooctyldimethylmethoxysilane, polydimethylsiloxanes having a terminal group selected from the group consisting of -H, -Cl, and -OR, wherein R is H or an alkyl group having from 1-4 carbon atoms, and $-CH=CH_2$, trifluoroethyl iodide, hexafluoropropylene oxide, trimethylchlorosilane, octadecyldimethylchlorosilane, and hexamethyldisilazane.

**4.** A water-repellent and antiseptic coating composition in accordance with claim 1 wherein said filler material includes -OH groups reactive with said hydrophobicizing agent.

**5.** A water-repellant and antiseptic coating composition in accordance with Claim 1 wherein said hydrophobicizing agent is reacted with at least 20 weight % of said filler material.